# EUROPÄISCHE PATENTSCHRIFT

(11) **EP 2 721 090 B1**
(45) Veröffentlichungstag und Bekanntmachung des Hinweises auf die Patenterteilung: **09.09.2015**
(21) Anmeldenummer: 12728477.6
(22) Anmeldetag: 14.06.2012
(51) Int. Cl.: C08G 63/688, C11D 3/37

(54) **VERZWEIGTE POLYESTER MIT SULFONATGRUPPEN**
BRANCHED POLYESTERS WITH SULFONATE GROUPS
POLYESTERS RAMIFIÉS CONTENANT DES GROUPES SULFONATE

(30) Priorität: 15.06.2011 EP 11170063
(43) Veröffentlichungstag der Anmeldung: 23.04.2014
(73) Patentinhaber: BASF SE, 67056 Ludwigshafen (DE)
(72) Erfinder: HABERECHT, Monika, 67063 Ludwigshafen (DE); DETERING, Jürgen, 67117 Limburgerhof (DE); BRUCHMANN, Bernd, 67251 Freinsheim (DE); WITTELER, Helmut, 67157 Wachenheim (DE); WEBER, Heike, 68239 Mannheim (DE); KOLTER, Karl, 67117 Limburgerhof (DE)
(86) Internationale Anmeldenummer: PCT/EP2012/061291
(87) Internationale Veröffentlichungsnummer: WO 2012/171998

(56) Entgegenhaltungen:
- DE-A1- 2 621 653
- DE-A1- 2 633 418

## Beschreibung

Die vorliegende Erfindung betrifft verzweigte Polyester mit Sulfonatgruppen und Gemische enthaltend verzweigte Polyester mit Sulfonatgruppen. Gegenstand der Erfindung ist weiterhin ein Verfahren zur Herstellung solcher verzweigter Polyester. Weiterhin betrifft die Erfindung die Verwendung dieser verzweigten Polyester als Belagsinhibitoren in wasserführenden Systemen sowie als Zusatz zu Spül-, Wasch- und Reinigungsmitteln, insbesondere zu phosphathaltigen und phosphatfreien Reinigerformulierungen für die maschinelle Geschirrreinigung.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt beziehungsweise ganz bevorzugt sind insbesondere auch diejenigen Ausführungsformen der vorliegenden Erfindung, in denen alle Merkmale des erfindungsgemäßen Gegenstandes die bevorzugten beziehungsweise ganz bevorzugten Bedeutungen haben.

In Wasser lösliche oder dispergierbare, verzweigte Copolyester enthaltend Sulfonatgruppen sind aus der DE 26 21 653 A1 bekannt. Diese verzweigten Copolyester sind gemäß der DE 26 21 653 A1 als Egalisierhilfsmittel in der Polyesterfärberei, vor allem für Schnellfärbeverfahren, als Haarfestiger, als Schlichten, als wasserlösliche Klebstoffe und als Zusatz für Klebstoffe, sowie als Modifizierungsmittel für Melaminharze oder andere Aminoplastharze geeignet.

Die DE 26 33 418 A1 beschreibt Haarbehandlungsmittel, mit einem Gehalt an in Wasser löslichen oder dispergierbaren verzweigten Copolyestern enthaltend Sulfonatgruppen.

In der DE 26 37 926 A1 werden in Wasser lösliche oder dispergierbare und verzweigte Copolyester enthaltend Sulfonatgruppen mit einem zur DE 26 21 653 A1 vergleichbaren Anwendungsspektrum beschrieben.

Die US 5,281,630 beschreibt ein Präpolymer basierend auf einem Terephthalpolymer, Glykol und oxyalkyliertem Polyol, das mit α,β-ungesättigten Dicarbonsäuren umgesetzt und anschließend sulfoniert wird.

Alemdar et al. beschreiben in Polymer 51 (2010), S. 5044-5050 die Herstellung ungesättigter Polyester unter Einsatz von Borsäure als Katalysator und sulfonierte Derivate der ungesättigten Polyester als bioabbaubare polymere oberflächenaktive Stoffe.

DE 39 05 915 A1 betrifft eine Beschichtungszusammensetzung, enthaltend Additionspolymere, Vernetzungsmittel und einen Säurekatalysator. Als Säurekatalysatoren werden Hydroxylgruppen enthaltende Bemsteinsäurediestersulfonsäuren und Bernsteinsäurepolyestersulfonsäuren beschrieben.

Einfache Sulfosuccinate, beispielsweise Mono- oder Dialkylsulfosuccinate oder Sulfosuccinamide, sind dem Fachmann aus dem Stand der Technik bereits seit 1930 vertraut. Diese Sulfosuccinate werden beispielsweise in Reinigungsmitteln, Pharmazeutika, Klebstoffen oder Beschichtungen eingesetzt. Polymere Sulfosuccinate werden jedoch kaum eingesetzt.

Eine Übersicht über die Einsatzgebiete von Sulfosuccinaten ist beispielweise zu finden in Anionic Surfactants: Organic Chemistry, edited by H. W. Stache, Marcel Dekker, New York, 1996: Chapter 9: Sulfosuccinates by A. Domsch, and B. Irrgang

Durch radikalische Polymerisation erhältliche Polymere aus carboxylgruppenhaltigen und/oder sulfonsäuregruppenhaltigen Monomeren sind seit einigen Jahren wichtiger Bestandteil von phosphathaltigen und phosphatfreien maschinellen Geschirrspülmitteln. Durch ihre schmutzdispergierende und belagsinhibierende Wirkung leisten sie einen erheblichen Beitrag zur Reinigungs- und Klarspülleistung der maschinellen Geschirrspülmittel. So sorgen sie dafür, dass auf dem Spülgut keine Salzablagerungen der härtebildenden Calcium- und Magnesiumionen zurückbleiben. Häufig werden Copolymere aus Acrylsäure und 2-Acrylamido-2-methylpropansulfonsäure für diesen Zweck eingesetzt.

Diese Polymere finden auch in wasserführenden Systemen als Mittel zur Verhinderung mineralischer Ablagerungen wie z.B. Calcium- und Magnesiumsulfat, Magnesiumhydroxid, Calcium- und Bariumsulfat und Calciumphosphat auf Wärmeübertragungsflächen oder in Rohrleitungen Verwendung. Als wasserführende Systeme sind hier u.a. Kühl- und Kesselspeisewassersysteme und industrielle Prozesswässer zu nennen. Aber auch in der Meerwasserentsalzung durch Destillation und durch Membranverfahren wie Umkehrosmose oder Elektrodialyse werden diese Polymere als Belagsinhibitoren eingesetzt.

Ein Nachteil dieser durch radikalische Polymerisation erhältlichen Polymere aus carboxylgruppenhaltigen und/oder sulfonsäuregruppenhaltigen Monomeren ist, dass sie nicht biologisch abbaubar sind. Biologisch abbaubare Polymere wie beispielsweise Polyasparaginsäure haben sich jedoch auf Grund hoher Herstellkosten als kommerziell nur schwer durchsetzbar erwiesen.

Die Aufgabe der Erfindung war es daher Stoffe zur Verfügung zu stellen, die sich für Reinigungszwecke, insbesondere als Zusatz zu phosphathaltigen und phosphatfreien Reinigerformulierungen für die maschinelle Geschirrreinigung, und zum Zwecke der Belagsinhibierung in wasserführenden Systemen einsetzen lassen und biologisch einfach abbaubar sind. Der Erfindung lag weiterhin die Aufgabe zugrunde, mittels eines technisch einfachen und preiswerten Verfahrens polymere Effektstoffe bereitzustellen, die über eine hohe Anzahl von Carboxygruppen und/oder Sulfonsäuregruppen, verfügen und aus Monomeren geringer Toxizität und guter Bioabbaubarkeit bestehen. Eine weitere Aufgabe der Erfindung war es Stoffe zur Verfügung zu stellen, die sich leicht in Formulierungen für Reinigungszwecke in ihren verschiedenen Darreichungsformen einarbeiten lassen.

Diese und andere Aufgaben werden, wie aus dem Offenbarungsgehalt der vorliegenden Erfindung ersichtlich, durch die verschiedenen Ausführungsformen der erfindungsgemäßen verzweigten Polyester mit Sulfonatgruppen gelöst, die erhältlich sind durch
a. die Umsetzung der Komponenten A, B, optional C und optional D zu verzweigten Polyestern, wobei
   i. die Komponente A gewählt wird aus der Gruppe der α,β-olefinisch ungesättigten Dicarbonsäuren (A₂), und
   ii. die Komponente B gewählt wird aus der Gruppe der di- oder höherfunktionellen Alkohole (By),
   iii. die optionale Komponente C gewählt wird aus der Gruppe der di- oder höherfunktionellen Carbonsäuren (Aₓ) und Hydroxycarbonsäuren (AₓB_{y}) ohne α,β-olefinisch ungesättigte Bindungen,
   iv. die optionale Komponente D gewählt wird aus den Verbindungen der Formel CH₃(-O-CH₂-CH₂)ₙ-OH, wobei n einer ganzen Zahl aus dem Bereich von 2 bis 40 entspricht,
   unter der Maßgabe, dass falls als Komponente B lediglich difunktionelle Alkohole (B₂) ausgewählt werden, die Komponente C bei der Umsetzung (a.) zugegen ist und aus der Gruppe der tri- oder höherfunktionellen Carbonsäuren (Aₓ) und der tri- oder höherfunktionellen Hydroxycarbonsäuren (AₓB_{y}) ohne α,β-olefinisch ungesättigte Bindungen gewählt wird,
b. und der anschließenden Umsetzung der in (a.) erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

Selbstverständlich können bei der Umsetzung der Komponenten A, B, optional C und optional D zu verzweigten Polyestern auch Mischungen verschiedener Komponenten A, Mischungen verschiedener Komponenten B, optional Mischungen verschiedener Komponenten C und/oder optional Mischungen verschiedener Komponenten D eingesetzt werden. Bevorzugt werden Mischungen mit bis zu drei verschiedenen Komponenten A, Mischungen mit bis zu drei verschiedenen Komponenten B und/oder optional Mischungen mit bis zu drei verschiedenen Komponenten C eingesetzt. Besonders bevorzugt werden Mischungen mit bis zu zwei verschiedenen Komponenten A, Mischungen mit bis zu zwei verschiedenen Komponenten B und/oder optional Mischungen mit bis zu zwei verschiedenen Komponenten C eingesetzt. Insbesondere werden bei der Umsetzung der Komponenten A, B, optional C und optional D zu verzweigten Polyestern bevorzugt jeweils eine Verbindung A, B und optional C eingesetzt.

Die Carbonsäuren (Aₓ) der Komponente C tragen keine Sulfonsäure oder Sulfonatgruppen.

Bei den verzweigten Polyestern mit Sulfonatgruppen der Erfindung handelt es sich bevorzugt um dendritische, insbesondere um hyperverzweigte Polyester.

Der Begriff dendritisches Polymer oder auch hochverzweigtes Polymer ist der Oberbegriff für eine Reihe verschiedener verzweigter Molekülstrukturen. Darunter fallen bspw. Dendrimere, Sternpolymere und hyperverzweigte Polymere.

Dendrimere entstehen ausgehend von einem Zentrum (i.d.R. ein kleines Molekül mit mehreren reaktiven Endgruppen) an die durch eine sich ständig wiederholende kontrollierte Reaktionsfolge, Generation um Generation eines verzweigenden Monomers angebracht wird. So wächst mit jedem Reaktionsschritt die Zahl der Monomer-Endgruppen im enstehenden Dendrimer exponentiell an. Ein charakteristisches Merkmal der Dendrimere ist die Anzahl der zu ihrem Aufbau durchgeführten Reaktionsstufen (Generationen). Auf Grund ihres einheitlichen Aufbaus (im Idealfall enthalten alle Äste exakt dieselbe Anzahl von Monomereinheiten) sind Dendrimere im Wesentlichen monodispers, d. h. sie weisen in der Regel eine definierte Molmasse auf. Molekular wie strukturell einheitliche hochverzweigte Polymere werden im Folgenden auch einheitlich als Dendrimere bezeichnet.

"Hyperverzweigte Polymere" sind im Rahmen dieser Erfindung hochverzweigte Polymere, die im Gegensatz zu den zuvor genannten Dendrimeren sowohl molekular wie auch strukturell uneinheitlich sind. Hyperverweigte Polymere weisen daher eine uneinheitliche Molmassenverteilung (Polydispersität) auf. Zur Herstellung hyperverzweigter Polymere unterscheidet man verschiedene Synthesestrategien. Eine Übersicht möglicher Syntheseverfahren findet sich in C. Gao, D. Yan, Prog. Polym. Sci. 29 (2004), 183.

Zur Definition von dendritischen und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Dendritische Polymere lassen sich über Ihren Verzweigungsgrad "Degree of Branching" charakterisieren. Zur Definition des "Degree of Branching" wird auf H. Frey et al., Acta Polym. 1997, 48, 30 verwiesen. Der Verzweigungsgrad DB ist dabei definiert als DB (%) = (T + Z) / (T + Z + L) x 100, mit
- T: mittlere Anzahl der terminal gebundenen Monomereinheiten,
- Z: mittlere Anzahl der Verzweigungen bildenden Monomereinheiten,
- L: mittlere Anzahl der linear gebundenen Monomereinheiten.

Dendrimere weisen im Allgemeinen einen Verzweigungsgrad DB von wenigstens 99 %, speziell 99,9 bis 100 %, auf.

Hyperverzweigte Polymere weisen vorzugsweise einen Verzweigungsgrad DB von 10 bis 95 %, bevorzugt 25 bis 90 % und insbesondere 30 bis 80 %, auf.

Die erfindungsgemäß eingesetzten verzweigten Polyester weisen vorzugsweise einen Verzweigungsgrad (Degree of Branching, DB) pro Molekül von 10 bis 95 %, bevorzugt von 10 bis 90 %, besonders bevorzugt von 10 bis 80 %, und insbesondere 20 bis 80 % auf.

Unter hyperverzweigten Polyestern mit oder ohne Sulfonatgruppen werden im Rahmen dieser Erfindung unvernetzte Polyester mit oder ohne Sulfonatgruppen verstanden, die sowohl strukturell als auch molekular uneinheitlich sind. Unvernetzt im Rahmen dieser Schrift bedeutet, dass ein Vernetzungsgrad von weniger als 15 Gew.%, bevorzugt von weniger als 10 Gew.%, bestimmt über den unlöslichen Anteil des Polymeren, vorhanden ist.

Der unlösliche Anteil des Polymeren wurde bestimmt durch vierstündige Extraktion in einer Soxhlet-Apparatur mit einem Lösungsmittel in dem das Polymer löslich ist, beispielsweise Tetrahydrofuran, Dimethylacetamid oder Hexafluorisopropanol, bevorzugt Tetrahydrofuran. Nach Trocknung des Rückstandes bis zur Gewichtskonstanz erfolgt eine Wägung des verbliebenen Rückstandes.

In einer bevorzugten Ausführungsform werden die erfindungsgemäßen verzweigten Polyester mit Sulfonatgruppen erhalten unter Einsatz der Komponente D, wobei bevorzugt weniger als 20 Mol -% der Komponente D bezogen auf die Gesamtmenge an Komponenten A, B, C und D eingesetzt werden. Ganz bevorzugt werden hierbei weniger als 10 Mol-% der Komponente D eingesetzt. Bevorzugt wird die Komponente D gewählt aus den Verbindungen der Formel CH₃(-PO-CH₂-CH₂)ₙ-OH, wobei n einer ganzen Zahl aus dem Bereich von 2 bis 30, besonders bevorzugt von 2 bis 25 entspricht.

In einer weiteren bevorzugten Ausführungsform der verzweigten Polyester mit Sulfonatgruppen beträgt in Schritt a. der Anteil der tri- oder höherfunktionellen Komponenten B und/oder C im Gemisch mit den difunktionellen Komponenten B und/oder C von 50 bis 100 Mol-%, bevorzugt von 70 bis 100 Mol-% und ganz besonders bevorzugt von 80 bis 100 Mol%, bezogen auf die Gesamtmenge an Komponenten B und/oder C.

In einer weiteren bevorzugten Ausführungsform der verzweigten Polyester mit Sulfonatgruppen beträgt in Schritt a. der Anteil der tri- oder höherfunktionellen Komponenten B und/oder C mindestens 30 Mol-% bezogen auf die Gesamtmenge an Komponenten A, B, C und D, besonders bevorzugt mindestens 35 Mol-% und ganz besonders bevorzugt mindestens 40 Mol-%.

In einer weiteren bevorzugten Ausführungsform der verzweigten Polyester mit Sulfonatgruppen sind in Schritt a. mindestens 30 Mol-% der Komponenten B und falls vorhanden C tri- oder höherfunktionell, bezogen auf die Gesamtmenge an Komponenten A, B, C und D. Bevorzugt sind hierbei mindestens 35 Mol-%, besonders bevorzugt 40 Mol-% und insbesondere mindestens 45 Mol-% der Komponenten B und falls vorhanden C tri- oder höherfunktionell. Bevorzugt beträgt der Anteil der tri- oder höherfunktionellen Komponenten B und falls vorhanden C, bezogen auf die Gesamtmenge an Komponenten A, B, C und D höchstens 90 Mol-%, bevorzugt höchstens 80 Mol-%, ganz bevorzugt höchstens 75 Mol-%.

In einer weiteren bevorzugten Ausführungsform der verzweigten Polyester mit Sulfonatgruppen werden in Schritt a. mindestens 5 Mol-% der Komponenten A, bezogen auf die Gesamtmenge an Komponenten A, B, C und D eingesetzt. Bevorzugt werden hierbei mindestens 10 Mol-% eingesetzt. Bevorzugt beträgt der Anteil der Komponente A, bezogen auf die Gesamtmenge an Komponenten A, B, C und D höchstens 50 Mol-%, bevorzugt höchstens 40 Mol-%.

Die Menge an Hydrogensulfit in Schritt b. kann im Rahmen der erfindungsgemäßen verzweigten Polyester mit Sulfonatgruppen abhängig von der jeweiligen Anwendung in einem weiten Bereich variieren. Bevorzugt werden jedoch von 10 bis 95 Mol-%, besonders bevorzugt von 20 bis 92 Mol-% und insbesondere von 30 bis 90 Mol-% Hydrogensulfit, bezogen auf die Menge an α,β-olefinisch ungesättigten Dicarbonsäuren (A₂), eingesetzt.

Die Molekulargewichte der verzweigten Polyester wurden vor der Umsetzung mit Hydrogensulfit mittels Gelpermeationschromatographie (GPC) gegenüber Polymethylmethacrylat (PMMA) als Standard bestimmt. Dabei wurden Dimethylacetamid oder Tetrahydrofuran als Eluenten verwendet. Die Methode ist beschrieben in Analytiker Taschenbuch Vol. 4, Seiten 433 - 442, Berlin 1984.

Die so bestimmten gewichtsmittleren Molekulargewichte (M_{w}) der Polyester A vor der Umsetzung mit Hydrogensulfit liegen im Bereich von 500 g/mol bis 50.000 g/mol, bevorzugt im Bereich von 750 g/mol bis 25.000 g/mol und ganz besonders bevorzugt im Bereich von 1000 g/mol bis 15.000 g/mol.

Die verzweigten Polyester vor der Umsetzung mit Hydrogensulfit weisen Säurezahlen von 10 bis 500 mg KOH/g Polymer, vorzugsweise 15 bis 400 mg KOH/g Polymer und ganz besonders bevorzugt 20 bis 300 mg KOH/g Polymer auf. Die Bestimmung der Säurezahl erfolgte entsprechend DIN 53402.

Die verzweigten Polyester A vor der Umsetzung mit Hydrogensulfit weisen Glasübergangstemperaturen im Bereich von -50 bis +50 °C, bevorzugt -40 bis +40 °C und ganz besonders bevorzugt -30 bis +40 °C auf. Die Bestimmung der Glasübergangstemperatur erfolgt mittels DSC (Differential Scanning Calorimetry).

Bevorzugt werden für die verzweigten Polyester mit Sulfonatgruppen als α,β-olefinisch ungesättigte Dicarbonsäuren (A₂) Maleinsäure, Itaconsäure, Fumarsäure, Citraconsäure, Mesaconsäure oder Glutaconsäure eingesetzt. Besonders bevorzugt sind Maleinsäure und Itaconsäure, ganz besonders bevorzugt Maleinsäure und deren Derivate wie Maleinsäureanhydrid.

Die Dicarbonsäuren (A₂) lassen sich entweder als solche oder in Form von Derivaten einsetzen.

Unter Derivaten der Dicarbonsäuren (A₂) werden hierbei bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

Unter diesen sind die Anhydride und die Mono- oder Dialkylester bevorzugt, besonders bevorzugt sind die Anhydride und die Mono- oder Di-C₁-C₄-alkylester und ganz besonders bevorzugt sind die Anhydride.

C₁-C₄-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.

Im Rahmen der vorliegenden Erfindung ist es auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen.

Bevorzugt werden für die verzweigten Polyester mit Sulfonatgruppen als difunktionelle Alkohole (By=B₂)

Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol, 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Isosorbid, Dipropylenglykol, Tripropylenglykol,

Polyethylenglykole HO(CH₂CH₂O)ₙ-H oder Polypropylenglykole HO(CH[CH₃]CH₂O)ₙ-H, wobei n eine ganze Zahl und n ≥ 4, bevorzugt n eine ganze Zahl aus dem Bereich von 4 bis 40, besonders bevorzugt von 4 bis 20 ist, Polyethylen-polypropylenglykole, wobei die Abfolge der Ethylenoxid- der Propylenoxid-Einheiten blockweise oder statistisch sein kann,

oder Polytetramethylenglykole, Poly-1,3-propandiole oder Polycaprolactone mit einem Molekulargewicht von bis zu 5000 g/mol, vorzugsweise mit einem Molekulargewicht bis zu 2000 g/mol
eingesetzt.

Besonders bevorzugt werden hierbei als difunktionelle Alkohole (By=B₂)

Ethylenglykol, 1,2-, 1,3- und 1,4-Cyclohexandiol, 1,3- und 1,4-Bis(hydroxymethyl)cyclohexan, Diethylenglykol, Triethylenglykol,
oder Polyethylenglykole mit einem mittleren Molekulargewicht zwischen 200 und 1000 g/mol
eingesetzt.

Bevorzugt werden für die verzweigten Polyester mit Sulfonatgruppen als tri- oder höherfunktionelle Alkohole (By mit y gleich 3 oder höher)

Glycerin, Trimethylolmethan, Trimethylolethan, Trimethylolpropan, Bis(trimethylolpropan), Trimethylolbutan, Trimethylolpentan, 1,2,4-Butantriol, 1,2,6-Hexantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Tris(hydroxymethyl)isocyanurat, Tris(hydroxyethyl)isocyanurat (THEIC), Tris(hydroxypropyl)isocyanurat,

Zucker oder Zuckeralkohole wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, oder Inosit,
tri- oder höherfunktionelle Polyetherole auf Basis tri- oder höherfunktioneller Alkohole, die durch Umsetzung mit Ethylenoxid, Propylenoxid und/oder Butylenoxid erhalten werden
oder tri- oder höherfunktionelle Polyesterole auf Basis tri- oder höherfunktioneller Alkohole, die durch Umsetzung mit Caprolacton erhalten werden
eingesetzt.

Besonders bevorzugt werden hierbei als tri- oder höherfunktionelle Alkohole (By mit y gleich 3 oder höher)

Glycerin, Diglycerin, Triglycerin, Trimethylolethan, Trimethylolpropan, Di(trimethylolpropan), Pentaerythrit, Sucrose oder Sorbit sowie deren Polyetherole auf Basis von Ethylenoxid und/oder Propylenoxid
und insbesondere
Glycerin, Diglycerin, Triglycerin, Trimethylolethan, Trimethylolpropan, Pentaerythrit oder deren Polyetherole auf Basis von Ethylenoxid eingesetzt.

Im Rahmen der vorliegenden Erfindung ist es auch möglich, ein Gemisch von di- oder höherfunktionellen Alkoholen (By) einzusetzen.

Bevorzugt werden für die verzweigten Polyester mit Sulfonatgruppen als di- oder höherfunktionellen Carbonsäuren (Ax) ohne α,β-olefinisch ungesättigte Bindungen
aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicardicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure
aromatische Dicarbonsäuren, wie Phthalsäure, Isophthalsäure oder Terephthalsäure
wobei die genannten Dicarbonsäuren auch substituiert sein können, bespielsweise durch C₁-C₂₀-Alkylgruppen oder C₂-C₂₀-Alkenylgruppen,
als beispielhafte Vertreter für substituierte Dicarbonsäuren oder deren Derivate seien genannt: 2-Methylmalonsäure, 2-Ethylmalonsäure, 2-Phenylmalonsäure, 2-Methylbernsteinsäure, 2-Ethylbernsteinsäure, 2-Phenylbemsteinsäure, 3,3-Dimethylglutarsäure, Dodecenylbernsteinsäure, Hexadecenylbernsteinsäure, Octadecenylbernsteinsäure,

Desweiteren können für die verzweigten Polyester mit Sulfonatgruppen als di- oder höherfunktionellen Carbonsäuren (Ax) ohne α,β-olefinisch ungesättigte Bindungen
Trimellithsäure und ihre Derivate, beispielsweise ihre Anhydride und/oder Esterderivate,
oder Pyromellithsäure und ihre Derivate, beispielsweise ihre Anhydride und/oder Esterderivate,
eingesetzt werden.

Die di- oder höherfunktionellen Carbonsäuren (Ax) lassen sich entweder als solche oder in Form von Derivaten einsetzen.

Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

Unter diesen sind die Anhydride und die Mono- oder Dialkylester bevorzugt, besonders bevorzugt sind die Anhydride und die Mono- oder Di-C₁-C₄-alkylester und ganz besonders bevorzugt sind die Anhydride.

Besonders bevorzugt werden für die verzweigten Polyester mit Sulfonatgruppen als di- oder höherfunktionelle Carbonsäuren (Ax) ohne α,β-olefinisch ungesättigte Bindungen
aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, Dodecenylbernsteinsäure, Hexadecenylbernsteinsäure oder Octadecenylbernsteinsäure
eingesetzt.

Im Rahmen der vorliegenden Erfindung ist es auch möglich, ein Gemisch von di- oder höherfunktionellen Carbonsäuren (Ax) ohne α,β-olefinisch ungesättigte Bindungen einzusetzen.

Bevorzugt werden für die verzweigten Polyester mit Sulfonatgruppen als Hydroxycarbonsäuren (AₓB_{y}) ohne α,β-olefinisch ungesättigte Bindungen

Zitronensäure, die Hydrate der Zitronensäure, wie z.B. Zitronensäuremonohydrat, Hydroxyessigsäure, Hydroxypropionsäure, Hydroxyvaleriansäure, Hydroxybernsteinsäure, Weinsäure, Isocitronensäure, Dimethylolpropionsäure oder Dimethylolbuttersäure eingesetzt.

Besonders bevorzugt wird Zitronensäure, ihre Hydrate oder Weinsäure eingesetzt.

Im Rahmen der vorliegenden Erfindung ist es auch möglich, ein Gemisch von Hydroxycarbonsäuren (AₓB_{y}) einzusetzen.

In einer bevorzugten Ausführungsform beruhen die verzweigten Polyester mit Sulfonatgruppen auf einer Anzahl von unterschiedlichen Komponenten A, B und C, die kleiner oder gleich 4 ist, d.h. in Schritt a. werden 4 oder weniger verschiedene Komponenten A, B und C eingesetzt. Bevorzugt ist die Anzahl verschiedener Komponenten A, B und C gleich 3. Selbstverständlich beträgt die Anzahl verschiedener Komponenten A, B und C mindestens 2.

In einer weiteren bevorzugten Ausführungsform ist für die verzweigten Polyester mit Sulfonatgruppen die Menge an Komponente A größer als 20 Mol-%, bevorzugt größer als 30 Mol-%, besonders bevorzugt größer als 50 Mol-% bezogen auf die Gesamtmenge an Carbonsäuren der Komponenten A und C zusammen.

Eine weitere Ausführungsform der Erfindung ist durch Gemische der erfindungsgemäßen verzweigten Polyester mit Sulfonatgruppen gegeben. Solche Gemische enthalten neben den verzweigten Polyestern der Erfindung weitere Bestandteile wie Lösungsmittel oder Tenside.

Bei diesen Gemischen handelt es sich bevorzugt um Reinigungs-, Spül- oder Waschmittel oder Gemische zur Wasserbehandlung. Die verzweigten Polyester der Erfindung können nach dem Fachmann bekannten Verfahren direkt in die Formulierungen (Gemische) in ihren verschiedenen Darreichungsformen eingearbeitet werden. Hierbei sind feste Formulierungen wie Pulver, Tabletten und flüssige Formulierungen zu nennen.

Ein weiterer Gegenstand der Erfindung ist daher die Verwendung der erfindungsgemäßen verzweigten Polyester mit Sulfonatgruppen oder deren Gemische in Spül-, Reinigungs- oder Waschmitteln, insbesondere in Geschirrspülmitteln.

Besonders vorteilhaft können sie in maschinellen Geschirrspülmitteln eingesetzt werden. Sie zeichnen sich dabei vor allem durch ihre belagsinhibierende Wirkung sowohl gegenüber anorganischen als auch organischen Belägen aus. Insbesondere inhibieren sie Beläge aus Calcium- und Magnesiumcarbonat und Calcium- und Magnesiumphosphaten und -phosphonaten. Zusätzlich verhindern sie Ablagerungen, die aus den Schmutzbestandteilen der Spülflotte stammen, wie Fett-, Eiweiß- und Stärkebeläge.

Die erfindungsgemäßen maschinellen Reinigungsformulierungen können in flüssiger oder fester Form, ein- oder mehrphasig, als Tabletten oder in Form anderer Dosiereinheiten, verpackt oder unverpackt bereitgestellt werden.

Die Polymere können sowohl in mehrkomponentigen Produktsystemen (getrennter Einsatz von Reiniger, Klarspüler und Regeneriersalz) als auch in solchen Geschirrspülmitteln eingesetzt werden, in denen die Funktionen von Reiniger, Klarspülmittel und Regeneriersalz in einem Produkt vereinigt sind (3-in-1-Produkte, 6-in-1-Produkte, 9-in-1-Produkte, all in one Produkte).

Eine bevorzugte Ausführungsform der erfindungsgemäßen Gemische ist gegeben durch eine Reinigungsformulierung für die maschinelle Geschirrreinigung enthaltend als Komponenten:
a) 1 bis 20 Gew.-% mindestens eines erfindungsgemäßen Polymers
b) 0 bis 50 Gew.-% Komplexbildner,
c) 0 bis 70 Gew.-% Phosphate,
d) 0 bis 60 Gew.-% weitere Builder und Cobuilder,
e) 0,1 bis 20 Gew.-% nichtionische Tenside,
f) 0,1 bis 30 Gew.-% Bleichmittel und gegebenenfalls Bleichaktivatoren,
g) 0 bis 8 Gew.-% Enzyme,
h) 0 bis 50 Gew.-% ein oder mehrere weitere Zusatzstoffe wie anionische oder zwitterionische Tenside, Alkaliträger, polymere Dispergiermittel, Korrosionsinhibitoren, Entschäumer, Farbstoffe, Duftstoffe, Füllstoffe, organische Lösungsmittel, Tablettierhillfsmittel, Disintegrationsmittel, Verdicker, Löslichkeitsvermittler und Wasser,
wobei die Summe der Komponenten a) bis h) 100 Gew.-% ergibt.

Eine ausführliche Beschreibung der Komponenten b) bis h) findet sich in WO 2008/13213 A1 und in DE 2007 006630 A1.

Die Komponenten b) bis h) sind dem Fachmann aus dem Stand der Technik bekannt und allgemein in WO 2008/13213 A1 und in DE 2007 006630 A1 beschrieben. Geeignete Komplexbildner b) sind beispielsweise in WO 2008/13213 A1 S.24-26 beschrieben. Als Phosphate c) kommen beispielsweise die in WO 2008/13213 A1 S. 18-21 beschriebenen Substanzen zum Einsatz. Unter Builder und Cobuilder d) werden beispielsweise die in WO 2008/13213 A1 S. 21-24 und in DE 2007 006630 A1 S. 5-7 beschriebenen Stoffe verstanden. Geeignete nichtionische Tenside e) findet der Fachmann beispielsweise in DE 2007 006630 A1 S. 9-12. Bleichmittel und Bleichaktivatoren f) sind dem Fachmann beispielsweise aus der WO 2008/13213 A1 S. 29-31 vertraut. Beispiele für Enzyme g) werden in WO 2008/13213 A1 S.26-29 beschrieben. Die Mengenverhältnisse der einzelnen Komponenten werden vom Fachmann abhängig vom jeweiligen Einsatzgebiet der Reinigungsformulierung eingestellt.

Ein weiterer Gegenstand der Erfindung ist die Verwendung der erfindungsgemäßen verzweigten Polyester mit Sulfonatgruppen oder deren Gemische als Belagsinhibitoren in wasserführenden Sytemen.

Wasserführende Systeme, in denen die erfindungsgemäßen Polymere verwendet werden können, sind insbesondere Meerwasser-Entsalzungsanlagen, Kühlwassersysteme und Kesselspeisewassersysteme und industrielle Prozesswässer.

Im Allgemeinen werden die erfindungsgemäßen Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylenphosphonsäure) (DTPMP) und Ethylendiamintetra(methylenphophonsäure) (EDTMP), die jeweils in Säureform oder in Form ihrer Natriumsalze verwendet werden,

Ein weiterer Gegenstand der Erfindung ist ein Verfahren zur Herstellung von verzweigten Polyestern mit Sulfonatgruppen, umfassend die
1. Umsetzung der Komponenten A, B, optional C und optional D zu verzweigten Polyestern, wobei
   i. die Komponente A gewählt wird aus der Gruppe der α,β-olefinisch ungesättigten Dicarbonsäuren (A₂), und
   ii. die Komponente B gewählt wird aus der Gruppe der di- oder höherfunktionellen Alkohole (By),
   iii. die optionale Komponente C gewählt wird aus der Gruppe der di- oder höherfunktionellen Carbonsäuren (Aₓ) und Hydroxycarbonsäuren (AₓB_{y}) ohne α,β-olefinisch ungesättigte Bindungen,
   iv. die optionale Komponente D gewählt wird aus den Verbindungen der Formel CH₃(-O-CH₂-CH₂)ₙ-OH, wobei n einer ganzen Zahl aus dem Bereich von 2 bis 40 entspricht,
   unter der Maßgabe, dass falls als Komponente B lediglich difunktionelle Alkohole (B₂) ausgewählt werden, die Komponente C bei der Umsetzung (a.) zugegen ist und aus der Gruppe der tri- oder höherfunktionellen Carbonsäuren (Aₓ) und Hydroxycarbonsäuren (AₓB_{y}) ohne α,β-olefinisch ungesättigte Bindungen gewählt wird,
2. und der anschließenden Umsetzung der in (a.) erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

Schritt 1. des erfindungsgemäßen Verfahrens kann in Substanz oder in Gegenwart eines Lösemittels durchgeführt werden. Als Lösemittel geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders Ether geeignet, wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauem führt.

In einer bevorzugten Ausführungsform wird die Reaktion frei von Lösungsmittel durchgeführt.

Zur Durchführung des Schritt 1. im erfindungsgemäßen Verfahren kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Man kann Schritt 1. des erfindungsgemäßen Verfahrens in Abwesenheit von Katalysatoren durchführen. Vorzugsweise arbeitet man jedoch in Gegenwart von mindestens einem Katalysator. Dies sind bevorzugt saure anorganische, metallorganische oder organische Katalysatoren oder Gemische aus mehreren sauren anorganischen, metallorganischen oder organischen Katalysatoren.

Als saure Katalysatoren werden im Rahmen dieser Schrift auch Lewis-Säuren angesehen, also solche Verbindungen gemäß Römpps Chemie-Lexikon, Stichwort "Säure-Base-Begriff", die ein Elektronenpaar in die Valenzschale eines ihrer Atome aufnehmen können.

Als saure anorganische Katalysatoren im Sinne der vorliegenden Erfindung sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH ≤ 6, insbesondere ≤ 5) und saures Aluminiumoxid zu nennen. Weiterhin sind beispielsweise Alumiumverbindungen der allgemeinen Formel Al(OR¹)₃ und Titanate der allgemeinen Formel Ti(OR¹)₄ als saure anorganische Katalysatoren einsetzbar, wobei die Reste R¹ jeweils gleich oder verschieden sein können und unabhängig voneinander gewählt sind aus

C₁-C₂₀-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl.

C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R¹ in Al(OR¹)₃ bzw. Ti(OR¹)₄ jeweils gleich und gewählt aus n-Butyl, Isopropyl, 2-Ethylhexyl, n-Octyl, Decyl oder Dodecyl.

Bevorzugte saure metallorganische Katalysatoren sind beispielsweise gewählt aus Dialkylzinnoxiden R¹₂SnO oder Dialkylzinndiestem R¹₂Sn(OR²)₂ wobei R¹ wie oben stehend definiert ist und gleich oder verschieden sein kann.

R² kann die gleichen Bedeutungen haben wie R¹ und zusätzlich C₆-C₁₂-Aryl sein, beispielsweise Phenyl, o-, m- oder p-Tolyl, Xylyl oder Naphthyl. R² kann jeweils gleich oder verschieden sein.

Beispiele für zinnorganische Katalysatoren sind Zinn(II)-n-octanoat, Zinn-(II)-2-ethylhexanoat, Zinn-(II)-laurat, Dibutylzinnoxid, Diphenylzinnoxid, Dibutylzinndichlorid, Dibutylzinndiacetat, Dibutylzinndilaurat, Dibutylzinndimaleat oder Dioctylzinndiacetat. Denkbar sind auch antimon-, wismut- oder aluminiumorganische Katalysatoren.

Besonders bevorzugte Vertreter für saure metallorganische Katalysatoren sind Dibutylzinnoxid, Diphenylzinnoxid und Dibutylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise sulfonsäuregruppen-haltige Polystyrolharze, die mit etwa 2 Mol-% Divinylbenzol vernetzt sind.

Man kann auch Kombinationen von zwei oder mehreren der vorgenannten Katalysatoren einsetzen. Auch ist es möglich, solche organischen oder metallorganischen oder auch anorganischen Katalysatoren, die in Form diskreter Moleküle vorliegen, in immobilisierter Form, zum Beispiel an Kieselgel oder an Zeolithen, einzusetzen.

Wünscht man saure anorganische, metallorganische oder organische Katalysatoren einzusetzen, so setzt man bevorzugt 1 bis 10000 ppm Katalysator, besonders bevorzugt 2 bis 5000 ppm, bezogen auf die Gesamtmasse der hydroxy- und der carboxygruppenhaltigen Verbindungen, ein.

Wünscht man saure anorganische, metallorganische oder organische Katalysatoren einzusetzen, so wird das Verfahren erfindungsgemäß bei Temperaturen von 60 bis 140 °C durchgeführt. Vorzugsweise arbeitet man bei Temperaturen von 80 bis 140 °C, besonders bevorzugt bei 100 bis 130 °C.

Es ist erfindungsgemäß auch möglich, als Katalysatoren Enzyme einzusetzen, wenn deren Einsatz auch weniger bevorzugt ist.

Dafür einsetzbare Enzyme sind beispielsweise ausgewählt unter Hydrolasen (E.C. 3.-.-.-), und unter diesen besonders unter den Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen und besonders bevorzugt Esterasen (E.C. 3.1.-.-). Ganz besonders bevorzugt sind Novozyme 435 (Lipase aus *Candida antarctica* B) oder Lipase aus Alcaligenes sp., Aspergillus sp., Mucor sp., Penicilium sp., Geotricum sp., Rhizopus sp., Burkholderia sp., Candida sp., Pseudomonas sp., Thermomyces sp. oder Schweinepankreas, insbesondere bevorzugt sind Lipase aus *Candida antarctica* B oder aus Burkholderia sp. Die aufgeführten Enzyme sind kommerziell erhältlich, beispielsweise bei Novozymes Biotech Inc., Dänemark.

Der Enzymgehalt im Reaktionsmedium liegt in der Regel im Bereich von etwa 0,1 bis 10 Gew.-%, bezogen auf die Summe der eingesetzten Komponenten

Wünscht man als Katalysatoren Enzyme einzusetzen, so wird Schritt 1. des Verfahren erfindungsgemäß bei Temperaturen von 20 und bis 120 °C, bevorzugt 20 bis 100 °C und besonders bevorzugt 20 bis 80 °C durchgeführt.

Wünscht man in der Polykondensationsreaktion Zitronensäure oder Zuckerverbindungen sowie deren Derivate einzusetzen, wird die Reaktion bei Temperaturen von 60 bis 140°C durchgeführt. Vorzugsweise arbeitet man bei Temperaturen von 80 bis 130 °C.

Das erfindungsgemäße Verfahren wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgas, unter denen insbesondere Argon zu nennen ist.

Die Druckbedingungen des erfindungsgemäßen Verfahrens sind in der Regel unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck.

Die Umsetzungsdauer des erfindungsgemäßen Verfahrens beträgt üblicherweise 10 Minuten bis 48 Stunden, bevorzugt 30 Minuten bis 24 Stunden und besonders bevorzugt 1 bis 12 Stunden.

Nach beendeter Reaktion in Schritt 1. lassen sich die hochfunktionellen verzweigten Polyester leicht isolieren, beispielsweise durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 bis 50 Gew.-%, bevorzugt 0,5 bis 25 Gew.-%, besonders bevorzugt 1 bis 10 Gew.-% bei Temperaturen von beispielsweise 10 bis 140 °C, bevorzugt 20 bis 130 °C und besonders bevorzugt 30 bis 120 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das Reaktionsgemisch kann weiterhin einer Vorwäsche und/oder einer Neutralisation und/oder einer Nachwäsche unterworfen werden, bevorzugt lediglich einer Neutralisation. Gegebenenfalls können Neutralisation und Vorwäsche in der Reihenfolge auch vertauscht werden.

Aus der wässrigen Phase der Wäsche und/oder Neutralisation können enthaltene Wertprodukte durch Ansäuern und Extraktion mit einem Lösungsmittel zumindest teilweise wiedergewonnen und von Neuem eingesetzt werden.

Verfahrenstechnisch können für eine Wäsche oder Neutralisation im erfindungsgemäßen Verfahren alle an sich bekannten Extraktions- und Waschverfahren und -apparate eingesetzt werden, z.B. solche, die in Ullmann's Encyclopedia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

In einer bevorzugten Ausführung kann jedoch auf eine Wäsche, Neutralisierung und Entfärbung verzichtet werden.

Schritt 2. des erfindungsgemäßen Verfahrens zur Sulfonierung der Polyester kann in Substanz oder in Gegenwart eines Lösemittels durchgeführt werden. Als Lösemittel geeignet sind beispielsweise Wasser oder Alkohole.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauem führt.

Schritt 2. des erfindungsgemäßen Verfahrens wird bei Temperaturen von 60 bis 150°C durchgeführt. Vorzugsweise arbeitet man bei Temperaturen von 80 bis 120, besonders bevorzugt bei von 90 bis 110°C.

Bevorzugt wird der Polyester bei Reaktionstemperatur als rührfähige Schmelze vorgelegt und dann mit einer wässrigen Lösung des Sulfonierungsreagenzes versetzt.

Als Sulfonierungsreagenz können Lösungen der Alkali- oder Erdalkalisalze der schwefligen Säure (Hydrogensulfite) verwendet werden. Die Konzentration der Lösungen beträgt von 10 bis 90 Gew%, bevorzugt von 20 bis 50 Gew% und ganz besonders bevorzugt von 30 bis 45 Gew%.

Bevorzugt werden wässrige Lösungen von Natrium-, Kalium- oder Magnesiumhydrogensulfit eingesetzt. Ganz besonders bevorzugt wässrige Lösungen von Natriumhydrogensulfilt.

Alternativ kann eine saure wässrige Lösung von Natriumthiosulfat verwendet werden, welches in Hydrogensulfit disproportioniert.

Die Umsetzungsdauer im Schritt 2. des erfindungsgemäßen Verfahrens beträgt üblicherweise 10 Minuten bis 48 Stunden, bevorzugt 30 Minuten bis 24 Stunden und besonders bevorzugt 1 bis 3 Stunden.

Die Reaktion ist beendet, wenn im Reaktionsgemisch kein Hydrogensulfit mehr nachgewiesen werden kann. Während der Umsetzung kann der Verbrauch des Hydrogensulfits im Reaktionsgemisch qualitativ oder quantitativ verfolgt werden.

Zur qualitativen Verfolgung eignet sich beispielsweise die Behandlung einer Probe des Reaktionsgemisches mit verdünnter Kaliumpermanganat-Lösung und nachfolgende Zugabe von Bariumchloridlösung. Vorhandenes Hydrogensulfit wird dabei erst durch Permanganat zu Sulfat oxidiert welches bei Kontakt mit Bariumionen als schwerlösliches Bariumsulfat ausfällt. Es ist zu beachten, dass der Nachweis durch Reaktion des Kaliumpermanganats mit Maleinsäure-Doppelbindungen gestört werden kann.

Zur quantitativen Verfolgung der Reaktion eignet sich eine iodometrische Bestimmung des Sulfits, wie beispielsweise beschrieben in Gerhard Schulze, Jürgen Simon "Jander/Jahr Maßanalyse", 17. Auflage 2009, de Gruyter, Berlin. S. 187.

Die vorliegende Erfindung stellt verzweigte Polyester mit Sulfonatgruppen zur Verfügung, die sich, auch auf Grund der hohen Dichte an Carbonsäuren, Carboxylaten und/oder Sulfonaten, für Reinigungszwecke und zum Zwecke der Wasserbehandlung einsetzen lassen und dennoch biologisch einfach abbaubar sind. Diese polymeren Effektstoffe, die eine geringe Toxizität aufweisen, sind mittels eines technisch relativ einfachen und preiswerten Verfahrens herstellbar und lassen sich leicht in Formulierungen für Reinigungszwecke in ihren verschiedenen Darreichungsformen einarbeiten.

Die Erfindung wird durch die Beispiele näher erläutert ohne dass die Beispiele den Gegenstand der Erfindung einschränken.

### Beispiele:

MSA = Maleinsäureanhydrid
TMP = Trimethylolpropan
TMP x n EO = Umsetzungsprodukt von TMP mit n molarem Überschuss an Ethylenoxid
ASA = Octadecenylbemsteinsäure
ZS = Zitronensäure Monohydrat
DBTL = Dibutylzinndilaurat
Ti(OBu)₄ = Titantetrabutylat

* x% NaHSO₃ bedeutet, dass in der Sulfonierungsreaktion die Menge an NaHSO₃ eingesetzt wurde, die erforderlich ist, um x% der theoretisch im Polymer enthaltenen α,β-olefinisch ungesättigten Doppelbindungen zu sulfonieren.

Die Molekulargewichte der unsulfonierten Polyester wurden durch Gelpermeationschromatographie (GPC) bestimmt (Säulenkombination: 2 x PLgel 3 µm MIXED-E und 1 x ResiPore 3 µm; Standard: Polymethylmethacrylat (PMMA); Eluent: THF). Die Säurezahlen (mg KOH/g Polymer) wurden entsprechend DIN 53402 bestimmt.

### Beispiel 1:

### Polymer 1: MSA : TMP x 12EO

In einen 500 ml-Rundkolben, ausgestattet mit Rührer, Innenthermometer, Gaseinleitungsrohr und absteigendem Kühler mit Auffanggefäß wurden 44,7 g MSA und 255,2 g TMP x 12 EO eingewogen und unter Rühren auf 160 °C erhitzt, bis eine homogene Schmelze entstanden war. Dann wurden 0,1 g DBTL zugegeben und die Reaktionsmischung unter Abscheidung von Reaktionswasser für 8 h bei 160 °C gerührt, bis die GPC-Kontrolle ein gewichtsmittleres Molekulargewicht von 6.900 g/mol anzeigte. Anschließend wurde die Reaktion durch Abkühlen auf Raumtemperatur beendet. Das Produkt wurde in Form eines gelben wasserlöslichen Harzes erhalten.
Folgende Kennzahlen wurden bestimmt:
Säurezahl = 47 mg KOH/g Polymer
Mₙ = 1.660 g/mol, M_{w} = 8.740 g/mol

Sulfoniertes Polymer 1a: (MSA : TMP x 12EO) * 25% NaHSO₃

In einen 500 ml-Rundkolben, ausgestattet mit Rührer, Innenthermometer, Gaseinleitungsrohr und Rückflusskühler wurden 150 g Polymer 1 und 15,3 g wässrige NaHSO₃-Lösung (39 %ig) eingewogen, unter Rühren auf 100 °C erhitzt und so lange bei der Temperatur gehalten bis der Hydrogensulfitnachweis in der Reaktionsmischung negativ ausfiel. Nachfolgend wurde die Reaktionsmischung auf Raumtemperatur abgekühlt und mittels 50%iger wässriger Kaliumhydroxidlösung auf einen pH-Wert von pH = 7 eingestellt. Die Reaktionsmischung wurde in eine Aluschale überführt und durch Trocknen im Vakuumtrockenschrank (70 °C) getrocknet.

Das Produkt wurde in Form eines gelben wasserlöslichen Harzes erhalten.

Folgende Kennzahlen wurden bestimmt:
Säurezahl = 8 mg KOH/g Polymer

### Beispiel 2:

### Polymer 2: MSA : TMP x 12EO : ASA

In einen 500 ml-Rundkolben, ausgestattet mit Rührer, Innenthermometer, Gaseinleitungsrohr und absteigendem Kühler mit Auffanggefäß wurden 137 g MSA, 491,4 g ASA und 1875,7 g TMP x 12 EO eingewogen und unter Rühren auf 170 °C erhitzt, bis eine homogene Schmelze entstanden war. Dann wurden 0,75 g Ti(OBu)₄ zugegeben und die Reaktionsmischung unter Abscheidung von Reaktionswasser für 11 h bei 170-180 °C gerührt, bis die GPC-Kontrolle ein gewichtsmittleres Molekulargewicht von 5.900 g/mol anzeigte. Anschließend wurde die Reaktion durch Abkühlen auf Raumtemperatur beendet.

Das Produkt wurde in Form eines gelblichen wasserunlöslichen Harzes erhalten. Folgende Kennzahlen wurden bestimmt:
Säurezahl = 33 mg KOH/g Polymer
Mₙ = 650 g/mol, M_{w} = 6.400 g/mol

### Sulfoniertes Polymer 2a: (MSA : TMP x 12EO : ASA) * 25% NaHSO₃

In einen 2000 ml-Rundkolben, ausgestattet mit Rührer, Innenthermometer, Gaseinleitungsrohr und Rückflusskühler wurden 1001 g Polymer 2 und 77,3 g wässrige NaH-SO₃-Lösung (39 %ig) eingewogen, unter Rühren auf 100 °C erhitzt und so lange bei der Temperatur gehalten bis der Hydrogensulfitnachweis in der Reaktionsmischung negativ ausfiel. Nachfolgend wurde die Reaktionsmischung auf Raumtemperatur abgekühlt und mittels 50%iger wässriger Kaliumhydroxidlösung auf einen pH-Wert von pH = 7 eingestellt. Die Reaktionsmischung wurde in eine Aluschale überführt und durch Trocknen im Vakuumtrockenschrank (70 °C) getrocknet.

Das Produkt wurde in Form eines gelben wasserlöslichen und wachsartigen Feststoffs erhalten.

Folgende Kennzahlen wurden bestimmt:
Säurezahl = 16 mg KOH/g Polymer

### Beispiel 3:

### Polymer 3: ZS : MSA : TMP

In einen 1000 ml-Rundkolben, ausgestattet mit Rührer, Innenthermometer, Gaseinleitungsrohr und absteigendem Kühler mit Auffanggefäß wurden 68,8 g MSA, 443 g ZS und 189,1 g TMP eingewogen und unter Rühren auf 130 °C erhitzt, bis eine homogene Schmelze entstanden war. Dann wurden 0,21 g Ti(OBu)₄ zugegeben und die Reaktionsmischung unter Abscheidung von Reaktionswasser für 3 h bei 130 °C gerührt, bis die GPC-Kontrolle ein gewichtsmittleres Molekulargewicht von 6.400 g/mol anzeigte. Anschließend wurde die Reaktion durch Abkühlen auf Raumtemperatur beendet.

Das Produkt wurde in Form eines farblosen wasserunlöslichen amorphen Feststoffs erhalten.

Folgende Kennzahlen wurden bestimmt:
Säurezahl = 367 mg KOH/g Polymer
Mₙ = 120 g/mol, M_{w} = 9.760 g/mol

### Sulfoniertes Polymer 3a: (ZS : MSA : TMP) * 30% NaHSO₃ :

In einen 250 ml-Rundkolben, ausgestattet mit Rührer, Innenthermometer, Gaseinleitungsrohr und Rückflusskühler wurden 150 g Polymer 3 und 12 g wässrige NaHSO₃-Lösung (39 %ig) eingewogen, unter Rühren auf 100 °C erhitzt und 5h bei dieser Temperatur gerührt. Nachfolgend wurde die Reaktionsmischung auf Raumtemperatur abgekühlt und mittels 50%iger wässriger Kaliumhydroxidlösung auf einen pH-Wert von pH = 5 eingestellt. Die Reaktionsmischung wurde in eine Aluschale überführt und durch Trocknen im Vakuumtrockenschrank (70 °C) getrocknet.

Das Produkt wurde in Form eines gelben wasserlöslichen und wachsartigen Feststoffs erhalten.

### Sulfoniertes Polymer 3b: (ZS : MSA : TMP) * 60% NaHSO₃

In einen 250 ml-Rundkolben, ausgestattet mit Rührer, Innenthermometer, Gaseinleitungsrohr und Rückflusskühler wurden 100 g Polymer 3 und 16 g wässrige NaHSO₃-Lösung (39 %ig) eingewogen, unter Rühren auf 100 °C erhitzt und 5h bei dieser Temperatur gerührt. Nachfolgend wurde die Reaktionsmischung auf Raumtemperatur abgekühlt und mittels 50%iger wässriger Kaliumhydroxidlösung auf einen pH-Wert von pH = 5 eingestellt. Die Reaktionsmischung wurde in eine Aluschale überführt und durch Trocknen im Vakuumtrockenschrank (70 °C) getrocknet.

Das Produkt wurde in Form eines gelben wasserlöslichen und wachsartigen Feststoffs erhalten.

### Sulfoniertes Polymer 3c: (ZS : MSA : TMP) * 90% NaHSO₃

In einen 2000 ml-Rundkolben, ausgestattet mit Rührer, Innenthermometer, Gaseinleitungsrohr und Rückflusskühler wurden 1008 g Polymer 3 und 24 g wässrige NaHSO₃-Lösung (39 %ig) eingewogen, unter Rühren auf 100 °C erhitzt und 5h bei dieser Temperatur gerührt. Nachfolgend wurde die Reaktionsmischung auf Raumtemperatur abgekühlt und mittels 50%iger wässriger Kaliumhydroxidlösung auf einen pH-Wert von pH = 5 eingestellt. Die Reaktionsmischung wurde in eine Aluschale überführt und durch Trocknen im Vakuumtrockenschrank (70 °C) getrocknet.

Das Produkt wurde in Form eines gelben wasserlöslichen und wachsartigen Feststoffs erhalten.

### Beispiel 4: Calciumcarbonat-Inhibierungstest

Eine Lösung aus NaHCO₃, Mg₂SO₄, CaCl₂ und Polymer wird 2 h bei 70 °C im Wasserbad geschüttelt. Nach Filtration der noch warmen Lösung über einen 0,45 µm Milexfilter, wird der Ca-Gehalt des Filtrats komplexometrisch oder mittels einer Ca²⁺-selektiven Elektrode ermittelt und durch Vergleich vorher / nachher die CaCO₃-Inhibierung in % ermittelt (siehe Formel I).
- Ca²⁺: 215 mg/L
- Mg²⁺: 43 mg/L
- HCO₃-: 1220 mg/L
- Na⁺: 460 mg/L
- Cl⁻: 380 mg/L
- SO₄²⁻: 170 mg/L
- Polymer: 10 mg/L
- Temperatur: 70 °C
- Zeit: 2 Stunden
- pH: 8,0-8,5
- CaCO₃-Inhibierung (%) =: mg (Ca²⁺) nach 24 h - mg (Ca²⁺) Blindwert nach 24 h / mg (Ca²⁺) Nullwert - mg (Ca²⁺) Blindwert nach 24 h x 100

**Tabelle 1**

| | Inhibierung [%] |
|---|---|
| Beispiel | |
| 1 | 40,8 |
| 1a | 49,2 |
| 2 | 47,5 |
| 2a | 61,5 |
| 3 | 35,8 |
| 3a | 44,8 |
| 3b | 52,3 |
| 3c | 59,8 |

Die Polymere wurden in den folgenden Phosphat-freien Formulierungen PF1 und PF2, sowie in der Phosphat-basierten Formulierung P1 getestet. Die Zusammensetzung der Polymere ist in Tabelle 3 (Angaben in Gew.-%) wiedergegeben.

**Tabelle 2**

| | PF 1 | PF 2 | P1 |
|---|---|---|---|
| Protease | 1 | 1 | 1 |
| Amylase | 0,2 | 0,2 | 0,2 |
| Nichtionisches Tensid | 5 | 5 | 3 |
| Polymer | 10 | 10 | 6,5 |
| Natriumpercarbonat | 10,5 | 10,5 | 14 |
| Tetraacetylethylendiamin | 4 | 4 | 4 |
| Natriumdisilikat | 2 | 2 | 2 |
| Natriumtripolyphosphat | | | 50 |
| Natriumcarbonat | 18,8 | 18,8 | 18,8 |
| Natriumcitrat-Dihydrat | 33 | 48 | |
| Methylglycindiessigsäure | 15 | 0 | |
| Hydroxyethan-(1,1-diphosphonsäure) | 0,5 | 0,5 | 0,5 |

Angaben in Gew.-% bezogen auf die Gesamtmenge aller Komponenten

Dabei wurden folgende Versuchbedingungen eingehalten:
- Geschirrspüler:: Miele G 1222 SCL
- Programm:: 65°C (mit Vorspülen)
- Spülgut:: 3 Messer (WMF Tafelmesser Berlin, Monoblock)
3 Trinkglas Amsterdam 0,2L
3 FRÜHSTÜCKSTELLER "OCEAN BLAU" (MELAMIN)
3 Porzellanteller: FAHNENTELLER FLACH 19 CM

Anordnung: Messer in der Besteckschublade, Gläser im oberen Korb, Teller im unteren Korb einsortiert
Geschirrspülmittel: 21 g
Schmutzzugabe: 50 g Ballastschmutz wird aufgetaut mit der Formulierung nach dem Vorspülen dosiert, Zusammensetzung siehe unten
Klarspültemperatur: 65°C
Wasserhärte: 21 °dH (Ca/Mg):HCO3 (3:1):1.35
Spülcyclen:15; dazwischen jeweils 1 h Pause (10 min geöffnete Tür, 50 min geschlossene Tür)
Auswertung: Visuell nach 15 Spülcyclen

Die Bewertung des Spülguts erfolgte nach 15 Cyclen in einer abgedunkelten Kammer unter Licht hinter einer Lochblende.

Zusammensetzung des Ballastschmutzes:
Stärke: 0,5 % Kartoffelstärke, 2,5 % Bratensoße
Fett: 10,2 % Margarine
Protein: 5,1 % Eigelb, 5,1 % Milch
Andere: 2,5 % Tomatenketchup, 2,5 % Senf, 0,1 % Benzoesäure, 71,4 % Wasser

### Ergebnis:

Die Formulierungen mit Polymer zeichnen sich insbesondere durch ihre sehr hohe belagsinhibierende Wirkung gegenüber anorganischen und organischen Ablagerungen auf Glas, Messer, Porzellan und Kunststoffteilen aus. Weiterhin erhöhen sie die Reinigungskraft des Geschirrspülmittels und begünstigen das Ablaufen des Wassers vom Spülgut, so dass besonders klare Gläser und glänzende Metallbesteckteile erhalten werden.

## Patentansprüche

1. Verzweigte Polyester mit Sulfonatgruppen erhältlich durch
a. die Umsetzung der Komponenten A, B, optional C und optional D zu verzweigten Polyestern, wobei
i. die Komponente A gewählt wird aus der Gruppe der α,β-olefinisch ungesättigten Dicarbonsäuren (A₂), und
ii. die Komponente B gewählt wird aus der Gruppe der di- oder höherfunktionellen Alkohole (B_{y}),
iii. die optionale Komponente C gewählt wird aus der Gruppe der di- oder höherfunktionellen Carbonsäuren (Aₓ) und Hydroxycarbonsäuren (AₓB_{y}) ohne α,β-olefinisch ungesättigte Bindungen,
iv. die optionale Komponente D gewählt wird aus den Verbindungen der Formel CH₃(-O-CH₂-CH₂)ₙ-OH, wobei n einer ganzen Zahl aus dem Bereich von 2 bis 40 entspricht,
unter der Maßgabe, dass
falls als Komponente B lediglich difunktionelle Alkohole (B₂) ausgewählt werden, die Komponente C bei der Umsetzung (a.) zugegen ist und aus der Gruppe der tri- oder höherfunktionellen Carbonsäuren (Aₓ) und der tri- oder höherfunktionellen Hydroxycarbonsäuren (AₓB_{y}) ohne α,β-olefinisch ungesättigte Bindungen gewählt wird,
b. und der anschließenden Umsetzung der in (a.) erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

2. Verzweigte Polyester nach Anspruch 1, wobei der Anteil der tri- oder höherfunktionellen Komponenten B_{y}, Aₓ oder AₓB_{y} in Schritt a. mindestens 30 Mol-% bezogen auf die Gesamtmenge an Komponenten A, B, C und D beträgt

3. Verzweigte Polyester nach Anspruch 1, wobei die α,β-olefinisch ungesättigte Dicarbonsäuren (A₂) Maleinsäure, Itaconsäure, Fumarsäure, Citraconsäure, Mesaconsäure oder Glutaconsäure sind.

4. Verzweigte Polyester nach Anspruch 1 bis 3, wobei die di- oder höherfunktionellen Alkohole (B_{y}) gewählt werden aus
B₂: Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol, 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Isosorbid, Dipropylenglykol, Tripropylenglykol,
Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylenpolypropylenglykole, wobei die Abfolge der Ethylenoxid- oder Propylenoxid-Einheiten blockweise oder statistisch sein kann,
Polytetramethylenglykole, Poly-1,3-propandiole oder Polycaprolactone mit einem Molgewicht von bis zu 5000 g/mol, vorzugsweise mit einem Molgewicht bis zu 2000 g/mol
B_{y} (y größer oder gleich 3):
Glycerin, Trimethylolethan, Trimethylolpropan, Bis(trimethylolpropan), 1,2,4-Butantriol, Pentaerythrit, Diglycerin, Triglycerin oder höhere Kondensationsprodukte des Glycerins, Di(trimethylolpropan), Di(pentaerythrit), Zucker wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, oder Inosit
tri- oder höherfunktionelle Polyetherole auf Basis tri- oder höherfunktioneller Alkohole, die durch Umsetzung mit Ethylenoxid, Propylenoxid und/oder Butylenoxid erhalten werden,
tri- oder höherfunktionelle Polyesterole auf Basis tri- oder höherfunktioneller Alkohole, die durch Umsetzung mit Caprolacton erhalten werden.

5. Verzweigte Polyester nach den Ansprüchen 1 bis 4, wobei di- oder höherfunktionelle Carbonsäuren (Aₓ) ohne α,β-olefinisch ungesättigte Bindungen gewählt werden aus der Gruppe der
aliphatischen Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure,
aromatischen Dicarbonsäuren, wie Phthalsäure, Isophthalsäure oder Terephthalsäure
wobei die genannten Dicarbonsäuren auch substituiert sein können
Trimellithsäure und ihre Derivate.

6. Verzweigte Polyester nach den Ansprüchen 1 bis 5, wobei Hydroxycarbonsäuren (AₓB_{y}) ohne α,β-olefinisch ungesättigte Bindungen gewählt werden aus der Gruppe der Zitronensäure, Hydroxyessigsäure, Hydroxypropionsäure, Hydroxyvaleriansäure, Hydroxybernsteinsäure, Weinsäure, Isocitronensäure, Dimethylolpropionsäure, Dimethylolbuttersäure.

7. Verzweigte Polyester nach den Ansprüchen 1 bis 6, wobei die Anzahl der verschiedenen eingesetzten Komponenten A, B und C kleiner oder gleich 4 ist.

8. Verzweigte Polyester nach den Ansprüchen 1 bis 7, wobei die Menge an Komponente A größer als 20 Mol-% ist, bezogen auf die Gesamtmenge an Carbonsäuren der Komponenten A und C zusammen.

9. Gemische enthaltend verzweigte Polyester gemäß den Ansprüchen 1 bis 8.

10. Gemische nach Anspruch 9, wobei es sich bei den Gemischen um Reinigungs-, Spül- oder Waschmittel oder Formulierungen zur Wasserbehandlung handelt.

11. Verwendung der verzweigten Polyester gemäß den Ansprüchen 1 bis 8 in Spül-, Reinigungs- oder Waschmitteln.

12. Verwendung nach Anspruch 11, wobei die verzweigten Polyester in Geschirrspülmitteln eingesetzt werden.

13. Verwendung der verzweigten Polyester gemäß den Ansprüchen 1 bis 8 in der Wasserbehandlung.

14. Verwendung nach Anspruch 13, wobei die verzweigten Polyester als Belagsinhibitoren in wasserführenden Systemen eingesetzt werden.

15. Verfahren zur Herstellung von verzweigten Polyestern mit Sulfonatgruppen, umfassend
a. die Umsetzung der Komponenten A, B, optional C und optional D zu verzweigten Polyestern, wobei
i. die Komponente A gewählt wird aus der Gruppe der α,β-olefinisch ungesättigten Dicarbonsäuren (A₂), und
ii. die Komponente B gewählt wird aus der Gruppe der di- oder höherfunktionellen Alkohole (B_{y}),
iii. die optionale Komponente C gewählt wird aus der Gruppe der di- oder höherfunktionellen Carbonsäuren (Aₓ) und Hydroxycarbonsäuren (AₓB_{y}) ohne α,β-olefinisch ungesättigte Bindungen,
iv. die optionale Komponente D gewählt wird aus den Verbindungen der Formel CH₃(-O-CH₂-CH₂)ₙ-OH, wobei n einer ganzen Zahl aus dem Bereich von 2 bis 40 entspricht,
unter der Maßgabe, dass
falls als Komponente B lediglich difunktionelle Alkohole (B₂) ausgewählt werden, die Komponente C bei der Umsetzung (a.) zugegen ist und aus der Gruppe der tri- oder höherfunktionellen Carbonsäuren (Aₓ) und Hydroxycarbonsäuren (AₓB_{y}) ohne α,β-olefinisch ungesättigte Bindungen gewählt wird,
b. und der anschließenden Umsetzung der in (a.) erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

## Claims

1. A branched polyester with sulfonate groups obtainable by
a. the reaction of the components A, B, optionally C and optionally D to give branched polyesters, where
i. the component A is selected from the group of α,β-olefinically unsaturated dicarboxylic acids (A₂), and
ii. the component B is selected from the group of di- or higher-functional alcohols (By),
iii. the optional component C is selected from the group of di- or higher-functional carboxylic acids (Aₓ) and hydroxycarboxylic acids (AₓB_{y}) without α,β-olefinically unsaturated bonds,
iv. the optional component D is selected from the compounds of the formula CH₃(-O-CH₂-CH₂)ₙ-OH, where n corresponds to an integer from the range from 2 to 40,
with the proviso that
if only difunctional alcohols (B₂) are selected as component B, the component C is present in the reaction (a.) and is selected from the group of tri- or higher-functional carboxylic acids (Aₓ) and tri- or higher-functional hydroxycarboxylic acids (AₓB_{y}) without α,β-olefinically unsaturated bonds,
b. and the subsequent reaction of the branched polyesters obtained in (a.) with hydrogen sulfite, where the molar amount of hydrogen sulfite is at most 95 mol%, based on the amount of α,β-olefinically unsaturated dicarboxylic acid (A₂).

2. The branched polyester according to claim 1, where the fraction of the tri- or higher-functional components B_{y}, Aₓ or AₓB_{y} in step a. is at least 30 mol%, based on the total amount of components A, B, C and D.

3. The branched polyester according to claim 1, where the α,β-olefinically unsaturated dicarboxylic acids (A₂) are maleic acid, itaconic acid, fumaric acid, citraconic acid, mesaconic acid or glutaconic acid.

4. The branched polyester according to claims 1 to 3, where the di- or higher-functional alcohols (B_{y}) are selected from
B₂: ethylene glycol, propane-1,2-diol, propane-1,3-diol, butane-1,2-diol, butane-1,3-diol, butane-1,4-diol, butane-2,3-diol, pentane-1,2-diol, pentane-1,3-diol, pentane-1,4-diol, pentane-1,5-diol, pentane-2,3-diol, pentane-2,4-diol, hexane-1,2-diol, hexane-1,3-diol, hexane-1,4-diol, hexane-1,5-diol, hexane-1,6-diol, hexane-2,5-diol, heptane-1,2-diol,
1,7-heptanediol, 1,8-octanediol, 1,2-octanediol, 1,9-nonanediol, 1,2-decanediol, 1,10-decanediol, 1,2-dodecanediol, 1,12-dodecanediol, 1,5-hexadiene-3,4-diol, 1,2- and 1,3-cyclopentanediols, 1,2-, 1,3- and 1,4-cyclohexanediols, 1,1-, 1,2-, 1,3- and 1,4-bis(hydroxymethyl)cyclohexanes, 1,1-, 1,2-, 1,3- and 1,4-bis(hydroxyethyl)cyclohexanes, neopentyl glycol, (2)-methyl-2,4-pentanediol, 2,4-dimethyl-2,4-pentanediol, 2-ethyl-1,3-hexanediol, 2,5-dimethyl-2,5-hexanediol, 2,2,4-trimethyl-1,3-pentanediol, pinacol, diethylene glycol, triethylene glycol, isosorbide, dipropylene glycol, tripropylene glycol,
polyethylene glycols HO(CH₂CH₂O)ₙ-H or polypropylene glycols HO(CH[CH₃]CH₂O)ₙ-H, where n is an integer and n is ≥ 4, polyethylene polypropylene glycols, where the order of the ethylene oxide or propylene oxide units can be blockwise or random,
polytetramethylene glycols, poly-1,3-propanediols or polycaprolactones with a molecular weight of up to 5000 g/mol, preferably with a molecular weight up to 2000 g/mol
B_{y} (y greater than or equal to 3): glycerol, trimethylolethane, trimethylolpropane, bis(trimethylolpropane), 1,2,4-butanetriol, pentaerythritol, diglycerol, triglycerol or higher condensation products of glycerol, di(trimethylolpropane), di(pentaerythritol), sugar, such as for example glucose, fructose or sucrose, sugar alcohols such as e.g. sorbitol, mannitol, threitol, erythritol, adonitol (ribitol), arabitol (lyxitol), xylitol, dulcitol (galactitol), maltitol, isomalt, or inositol,
tri- or higher-functional polyetherols based on tri- or higher-functional alcohols, which are obtained by reaction with ethylene oxide, propylene oxide and/or butylene oxide,
tri- or higher-functional polyesterols based on tri- or higher-functional alcohols, which are obtained by reaction with caprolactone.

5. The branched polyester according to claims 1 to 4, where di- or higher-functional carboxylic acids (Aₓ) without α,β-olefinically unsaturated bonds are selected from the group of
aliphatic dicarboxylic acids, such as oxalic acid, malonic acid, succinic acid, glutaric acid, adipic acid, pimelic acid, suberic acid, azelaic acid, sebacic acid, undecane-α,ω-dicarboxylic acid, dodecane-α,ω-dicarboxylic acid, cis- and trans-cyclohexane-1,2-dicarboxylic acid, cis- and trans-cyclohexane-1,3-dicarboxylic acid, cis- and trans-cyclohexane-1,4-dicarboxylic acid, cis- and trans-cyclopentane-1,2-dicarboxylic acid, cis-and trans-cyclopentane-1,3-dicarboxylic acid,
aromatic dicarboxylic acids, such as phthalic acid, isophthalic acid or terephthalic acid
where the specified dicarboxylic acids can also be substituted
trimellitic acid and its derivatives.

6. The branched polyester according to claims 1 to 5, where hydroxycarboxylic acids (AₓB_{y}) without α,β-olefinically unsaturated bonds are selected from the group of citric acid, hydroxyacetic acid, hydroxypropionic acid, hydroxyvaleric acid, hydroxysuccinic acid, tartaric acid, isocitric acid, dimethylolpropionic acid, dimethylolbutyric acid.

7. The branched polyester according to claims 1 to 6, where the number of different components A, B and C used is less than or equal to 4.

8. The branched polyester according to claims 1 to 7, where the amount of component A is greater than 20 mol%, based on the total amount of carboxylic acids of components A and C together.

9. A mixture comprising branched polyesters according to claims 1 to 8.

10. The mixture according to claim 9, where the mixture is a cleaner, rinse or detergent or formulation for water treatment.

11. The use of the branched polyesters according to claims 1 to 8 in rinses, cleaners or detergents.

12. The use according to claim 11, where the branched polyesters are used in dishwashing detergents.

13. The use of the branched polyesters according to claims 1 to 8 in water treatment.

14. The use according to claim 13, where the branched polyesters are used as deposit inhibitors in water-conveying systems.

15. A method for producing branched polyesters with sulfonate groups, comprising
a. the reaction of the components A, B, optionally C and optionally D to give branched polyesters, where
i. the component A is selected from the group of α,β-olefinically unsaturated dicarboxylic acids (A₂), and
ii. the component B is selected from the group of di- or higher-functional alcohols (By),
iii. the optional component C is selected from the group of di- or higher-functional carboxylic acids (Aₓ) and hydroxycarboxylic acids (AₓB_{y}) without α,β-olefinically unsaturated bonds,
iv. the optional component D is selected from the compounds of the formula CH₃(-O-CH₂-CH₂)ₙ-OH, where n corresponds to an integer from the range from 2 to 40,
with the proviso that
if only difunctional alcohols (B₂) are selected as component B, the component C is present in the reaction (a.) and is selected from the group of tri- or higher-functional carboxylic acids (Aₓ) and hydroxycarboxylic acids (AₓB_{y}) without α,β-olefinically unsaturated bonds,
and the subsequent reaction of the branched polyesters obtained in (a.) with hydrogen sulfite, where the molar amount of hydrogen sulfite is at most 95 mol%, based on the amount of α,β-olefinically unsaturated dicarboxylic acid (A₂).

## Revendications

1. Polyesters ramifiés comportant des groupes sulfonate, pouvant être obtenus par
a. la mise en réaction des composants A, B, en option C et en option D, conduisant à des polyesters ramifiés,
i. le composant A étant choisi dans le groupe des acides dicarboxyliques à insaturation α,β-oléfinique (A₂), et
ii. le composant B étant choisi dans le groupe des alcools difonctionnels ou à plus haute fonctionnalité (B_{y}),
iii. le composant optionnel C étant choisi dans le groupe des acides carboxyliques (Aₓ) et acides hydroxycarboxyliques (AₓB_{y}) difonctionnels ou à plus haute fonctionnalité, sans liaisons à insaturation α,β-oléfinique,
iv. le composant optionnel D étant choisi parmi les composés de formule CH₃(-O-CH₂-CH₂)ₙ-OH, n correspondant à un nombre entier choisi dans la plage de 2 à 40,
étant entendu que
si on choisit comme composant B seulement des alcools difonctionnels (B₂), le composant C est présent dans la réaction (a.) et est choisi dans le groupe des acides carboxyliques trifonctionnels ou à plus haute fonctionnalité (Aₓ) et des acides hydroxycarboxyliques trifonctionnels ou à plus haute fonctionnalité (AₓB_{y}) sans liaisons à insaturation α,β-oléfinique,
b. et la mise en réaction subséquente des polyesters ramifiés obtenus en (a.) avec de l'hydrogénosulfite, la quantité molaire d'hydrogénosulfite étant au maximum de 95 % en moles, par rapport à la quantité d'acide dicarboxylique (A₂) à insaturation α,β-oléfinique.

2. Polyesters ramifiés selon la revendication 1, dans lesquels la proportion des composants trifonctionnels ou à plus haute fonctionnalité B_{y}, Aₓ ou AₓB_{y} dans l'étape a. est d'au moins 30 % en moles, par rapport à la quantité totale des composants A, B, C et D.

3. Polyesters ramifiés selon la revendication 1, dans lesquels les acides dicarboxyliques à insaturation α,β-oléfinique (A₂) sont l'acide maléique, l'acide itaconique, l'acide fumarique, l'acide citraconique, l'acide mésaconique ou l'acide glutaconique.

4. Polyesters ramifiés selon l'une quelconque des revendications 1 à 3, dans lesquels les alcools difonctionnels ou à plus haute fonctionnalité (B_{y}) sont choisis parmi
B2 : l'éthylèneglycol, le propane-1,2-diol, le propane-1,3-diol, le butane-1,2-diol, le butane-1,3-diol, le butane-1,4-diol, le butane-2,3-diol, le pentane-1,2-diol, le pentane-1,3-diol, le pentane-1,4-diol, le pentane-1,5-diol, le pentane-2,3-diol, le pentane-2,4-diol, l'hexane-1,2-diol, l'hexane-1,3-diol, l'hexane-1,4-diol, l'hexane-1,5-diol, l'hexane-1,6-diol, l'hexane-2,5-diol, l'heptane-1,2-diol, le 1,7-heptanediol, le 1,8-octanediol, le 1,2-octanediol, le 1,9-nonanediol, 1,2-décanediol, le 1,10-décanediol, le 1,2-dodécanediol, le 1,12-dodécanediol, le 1,5-hexadiène-3,4-diol, les 1,2- et 1,3-cyclopentanediols, les 1,2-, 1,3- et 1,4-cyclohexanediols, les 1,1-, 1,2-, 1,3- et 1,4-bis-(hydroxyméthyl)cyclohexanes, les 1,1-, 1,2-, 1,3- et 1,4-bis(hydroxyéthyl)-cyclohexanes, le néopentylglycol, le (2)-méthyl-2,4-pentanediol, le 2,4-diméthyl-2,4-pentanediol, le 2-éthyl-1,3-hexanediol, le 2,5-diméthyl-2,5-hexanediol, le 2,2,4-triméthyl-1,3-pentanediol, le pinacol, le diéthylèneglycol, le triéthylèneglycol, l'isosorbide, le dipropylèneglycol, le tripropylèneglycol,
les polyéthylèneglycols HO(CH₂CH₂O)ₙ-H ou les polypropylèneglycols HO(CH[CH₃]CH₂O)ₙ-H, n étant un nombre entier et n étant ≥ 4, les polyéthylènepolypropylèneglycols, l'ordre des unités oxyde d'éthylène ou oxyde de propylène pouvant être séquencé ou statistique,
les polytétraméthylèneglycols, poly-1,3-propanediols ou polycaprolactones ayant une masse moléculaire allant jusqu'à 5 000 g/mole, de préférence ayant une masse moléculaire allant jusqu'à 2 000 g/mole
B_{y} (y étant supérieur ou égal à 3) :
le glycérol, le triméthyloléthane, le triméthylolpropane, le bis(triméthylolpropane), le 1,2,4-butanetriol, le pentaérythritol, le diglycérol, le triglycérol ou des produits de condensation supérieurs du glycérol, le di(triméthylolpropane), le di(pentaérythritol), des sucres comme par exemple le glucose, le fructose ou le saccharose, des alcools glucidiques comme par exemple le sorbitol, le mannitol, le thréitol, l'érythritol, l'adonitol (ribitol), l'arabitol (lyxitol), le xylitol, le dulcitol (galactitol), le maltitol, l'isomalt, ou l'inositol
des polyétherols trifonctionnels ou à plus haute fonctionnalité, à base d'alcools trifonctionnels ou à plus haute fonctionnalité qui sont obtenus par mise en réaction avec l'oxyde d'éthylène, l'oxyde de propylène et/ou l'oxyde de butylène,
des polyesterols trifonctionnels ou à plus haute fonctionnalité, à base d'alcools trifonctionnels ou à plus haute fonctionnalité qui sont obtenus par mise en réaction avec la caprolactone.

5. Polyesters ramifiés selon les revendications 1 à 4, dans lesquels les acides carboxyliques difonctionnels ou à plus haute fonctionnalité (Aₓ) sans liaisons à insaturation α,β-oléfinique sont choisis dans le groupe des
acides dicarboxyliques aliphatiques, tels que l'acide oxalique, l'acide malonique, l'acide succinique, l'acide glutarique, l'acide adipique, l'acide pimélique, l'acide subérique, l'acide azélaïque, l'acide sébacique, l'acide undécane-α,ω-dicarboxylique, l'acide dodécane-α,ω-dicarboxylique, l'acide cis- et l'acide trans-cyclohexane-1,2-dicarboxylique, l'acide cis- et l'acide trans-cyclohexane-1,3-dicarboxylique, l'acide cis- et l'acide trans-cyclohexane-1,4-dicarboxylique, l'acide cis- et l'acide trans-cyclopentane-1,2-dicarboxylique, l'acide cis- et l'acide trans-cyclopentane-1,3-dicarboxylique,
des acides dicarboxyliques aromatiques tels que l'acide phtalique, l'acide isophtalique ou l'acide téréphtalique,
lesdits acides dicarboxyliques nommés pouvant également être substitués,
l'acide trimellitique et ses dérivés.

6. Polyesters ramifiés selon les revendications 1 à 5, dans lesquels les acides hydroxycarboxyliques (AₓB_{y}) sans liaisons à insaturation α,β-oléfinique sont choisis dans le groupe constitué par l'acide citrique, l'acide hydroxyacétique, l'acide hydroxypropionique, l'acide hydroxyvalérique, l'acide hydroxysuccinique, l'acide d-tartrique, l'acide isocitrique, l'acide diméthylolpropionique, l'acide diméthylolbutyrique.

7. Polyesters ramifiés selon les revendications 1 à 6, dans lesquels le nombre des différents composants A, B et C utilisés est inférieur ou égal à 4.

8. Polyesters ramifiés selon les revendications 1 à 7, dans lesquels la quantité de composant A est supérieure à 20 % en moles, par rapport à la quantité totale d'acides carboxyliques des composants A et C ensemble.

9. Mélanges contenant des polyesters ramifiés selon les revendications 1 à 8.

10. Mélanges selon la revendication 9, les mélanges consistant en des produits de nettoyage, de rinçage ou de lavage ou des compositions pour le traitement de l'eau.

11. Utilisation des polyesters ramifiés selon les revendications 1 à 8, dans des produits de rinçage, de nettoyage ou de lavage.

12. Utilisation selon la revendication 11, dans laquelle les polyesters ramifiés sont utilisés dans des produits de lavage de la vaisselle.

13. Utilisation des polyesters ramifiés selon les revendications 1 à 8 dans le traitement de l'eau.

14. Utilisation selon la revendication 13, dans laquelle les polyesters ramifiés sont utilisés comme inhibiteurs de dépôt dans des systèmes de conduite d'eau.

15. Procédé pour la préparation de polyesters ramifiés comportant des groupes sulfonate, comprenant
a. la mise en réaction des composants A, B, en option C et en option D, conduisant à des polyesters ramifiés,
i. le composant A étant choisi dans le groupe des acides dicarboxyliques à insaturation α,β-oléfinique (A₂), et
ii. le composant B étant choisi dans le groupe des alcools difonctionnels ou à plus haute fonctionnalité (B_{y}),
iii. le composant optionnel C étant choisi dans le groupe des acides carboxyliques (Aₓ) et acides hydroxycarboxyliques (AₓB_{y}) difonctionnels ou à plus haute fonctionnalité, sans liaisons à insaturation α,β-oléfinique,
iv. le composant optionnel D étant choisi parmi les composés de formule CH₃(-O-CH₂-CH₂)ₙ-OH, n correspondant à un nombre entier choisi dans la plage de 2 à 40,
étant entendu que
si on choisit comme composant B seulement des alcools difonctionnels (B₂), le composant C est présent dans la réaction (a.) et est choisi dans le groupe des acides carboxyliques (Aₓ) et acides hydroxycarboxyliques (AₓB_{y}) trifonctionnels ou à plus haute fonctionnalité, sans liaisons à insaturation α,β-oléfinique,
b. et la mise en réaction subséquente des polyesters ramifiés obtenus en (a.) avec de l'hydrogénosulfite, la quantité molaire d'hydrogénosulfite étant au maximum de 95 % en moles, par rapport à la quantité d'acide dicarboxylique (A₂) à insaturation α,β-oléfinique.
